# FASCICULE DE BREVET EUROPEEN

(11) **EP 1 067 031 B1**
(45) Date de publication et mention de la délivrance du brevet: **15.03.2006**
(21) Numéro de dépôt: 00401947.7
(22) Date de dépôt: 06.07.2000
(51) Int. Cl.: B60T 7/10, G05G 1/06

(54) **Poignée de frein à main en U pour véhicule automobile**
U-förmiger Handbremshebel für Kraftfahrzeug
U-shape handbrake handle for vehicle

(30) Priorité: 07.07.1999 FR 9908787
(43) Date de publication de la demande: 10.01.2001
(73) Titulaire: Renault s.a.s., 92100 Boulogne Billancourt (FR)
(72) Inventeur: Gandon, Fabrice, 78170 La Celle Saint Cloud (FR); Moulin, Didier, 13013 Marseille (FR)
(74) Mandataire: Davies, Owen Robert Treharne

(56) Documents cités:
- EP-A- 0 466 534
- DE-A- 2 708 993
- DE-U- 7 838 028
- FR-A- 2 350 231

## Description

La présente invention est relative à une poignée de frein à main pour véhicule automobile.

On connaît, notamment du document US 4 818 008, une poignée de frein à main en U pour véhicule automobile, comprenant deux parties de liaison formant les branches dudit U et une partie de préhension formant l'âme dudit U.

Lorsqu'une telle poignée est mise en place dans un véhicule automobile, sa partie de préhension est orientée selon une direction sensiblement transversale à la direction de marche de ce véhicule.

Cette orientation est proche de l'orientation naturelle de la main du conducteur, contrairement à une poignée de frein à main classique orientée selon la direction de marche du véhicule. Il en résulte un gain d'ergonomie.

Dans le document EP-0466534, il est proposé un levier de frein à main, dont le poignée comporte une portion de préhension relié à une extrémité d'au moins une branche radiale, dont l'autre extrémité est reliée à un manchon disposé autour d'un organe tubulaire.

La présente invention a pour but principal de fournir une poignée de frein à main en U dont l'ergonomie est encore améliorée par rapport à la technique antérieure.

On atteint ce but principal de l'invention avec une poignée de frein à main en U pour véhicule automobile, comprenant deux parties de liaison formant les branches dudit U et une partie de préhension formant l'âme dudit U, remarquable en ce que ladite partie de préhension s'étend selon une direction formant un léger biais avec lesdites parties de liaison et caractérisée en ce qu'elle comprend un organe de déverrouillage situé sur ladite partie de préhension, dans le prolongement de celle-ci.

Grâce à ces caractéristiques, on obtient une poignée de frein à main en U dont l'orientation, lorsqu'elle est mise en place dans un véhicule automobile, coïncide de manière sensiblement parfaite avec l'orientation naturelle de la main du conducteur, d'où il résulte une ergonomie optimale.

La présente invention a également pour but de fournir une poignée de frein à main en U conforme à ce qui précède qui puisse être montée aussi bien sur un véhicule à conduite à gauche que sur un véhicule à conduite à droite.

On atteint ce but de l'invention avec une poignée conforme à ce qui précède, remarquable en ce qu'elle est symétrique par rapport à un plan coupant lesdites parties de liaison et ladite partie de préhension.

Grâce à ces caractéristiques, il suffit d'inverser la poignée en U selon que l'on souhaite la monter sur un véhicule à conduite à gauche ou à droite.

Suivant d'autres caractéristiques de l'invention:
- ledit biais est compris entre 10° et 20°,
- ledit biais vaut sensiblement 17°,
- ledit organe de déverrouillage est disposé dans une partie en creux formée dans ladite poignée,
- ladite partie en creux est conformée de manière à épouser sensiblement la forme d'un pouce,
- ladite poignée comprend un organe de déverrouillage situé sur ladite partie de préhension, entre lesdites parties de liaison,
- ladite poignée comprend des moyens pour tirer sur un câble de frein à main lorsqu'on appuie sur ledit organe de déverrouillage,
- lesdits moyens comprennent une tringle d'actionnement dont une extrémité est reliée audit organe de déverrouillage et dont l'autre extrémité est destinée à être reliée audit câble, soit directement, soit par l'intermédiaire d'une bielle de renvoi.

D'autres caractéristiques et avantages de la présente invention apparaîtront à la lecture de la description qui va suivre, et à l'examen du dessin annexé, dans lequel:
- la figure 1 est une vue en perspective de la poignée selon l'invention;
- la figure 2 est une vue de dessus de la poignée selon l'invention lorsqu'elle est montée sur un véhicule automobile à conduite à gauche, et
- la figure 3 est une vue de dessus de la poignée selon l'invention lorsqu'elle est montée sur un véhicule automobile à conduite à droite.

Sur ces figures, des références identiques désignent des organes ou ensembles d'organes identiques ou analogues.

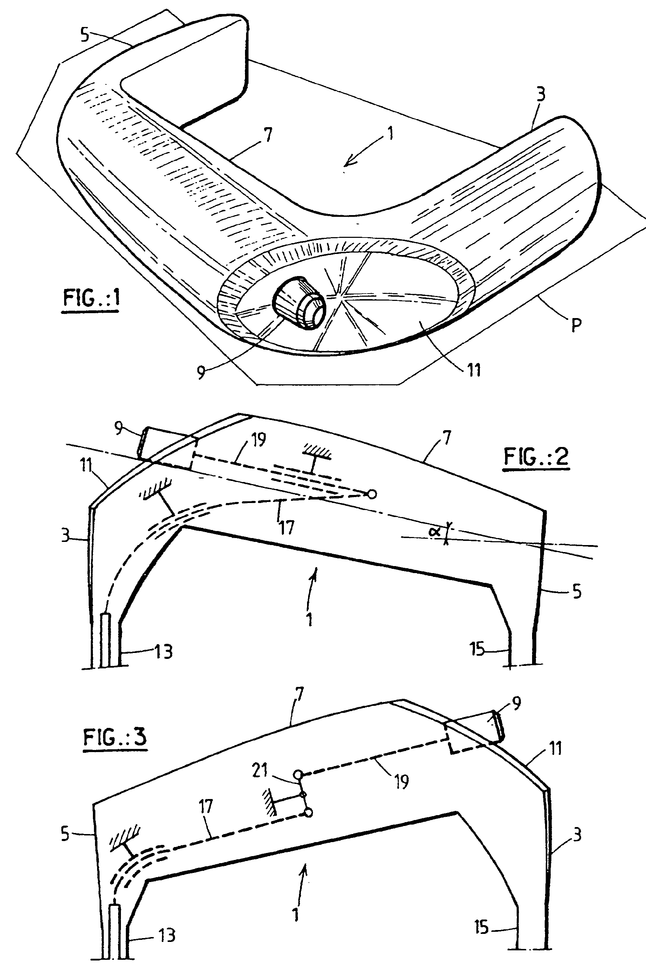

On se reporte à présent à la figure 1, sur laquelle on voit que la poignée 1 selon l'invention a globalement la forme d'un U dont les deux branches sont formées par deux parties de liaison 3, 5, et dont l'âme est formée par une partie de préhension 7.

Les sections des parties de liaison 3, 5 et de la partie de préhension 7 peuvent être, par exemple, circulaires ou hémi-circulaires, comme cela est représenté.

Selon une caractéristique essentielle de la poignée 1, particulièrement visible sur les figures 2 et 3, la partie de préhension 7 s'étend selon une direction formant un léger biais α avec les parties de liaison 3 et 5.

De manière préférée, ce biais est compris entre 10° et 20°. De manière particulièrement préférée, ce biais vaut sensiblement 17°.

Selon une autre caractéristique essentielle de l'invention, visible sur la figure 1, la poignée 1 est symétrique par rapport à un plan P coupant les parties de liaison 3 et 5 et la partie de préhension 7.

La poignée 1 comprend par ailleurs, de préférence, un organe de déverrouillage 9 ayant sensiblement la forme d'un bouton, placé sur la partie de préhension 7, dans le prolongement de celle-ci.

De manière préférée, comme cela est visible sur la figure 1, cet organe de déverrouillage est disposé dans une partie en creux 11 formée dans la poignée à la jonction entre une partie de liaison 3 et la partie de préhension 7.

De manière avantageuse, la partie en creux 11 peut être conformée de manière à épouser sensiblement la forme d'un pouce.

Les parties de liaison 3, 5 sont destinées à être montées sur des bras 13, 15 articulés sur le châssis d'un véhicule automobile (voir figures 2 et 3). Ces bras s'étendent dans une direction sensiblement parallèle à la direction de marche du véhicule, et l'un d'eux contient un câble de frein à main 17.

La poignée 1 est de préférence creuse, de manière à pouvoir accueillir le câble 17 ainsi qu'un mécanisme destiné à tirer sur ce câble.

Lorsque la poignée 1 est montée sur les bras 13, 15 de sorte que le câble de frein à main 17 passe dans la partie de liaison 3 qui est située du côté de l'organe de déverrouillage 9 (voir figure 2), ce mécanisme peut comprendre une tringle d'actionnement 19 montée coulissante à l'intérieur de la poignée, reliée d'une part à l'organe 9 et d'autre part au câble de frein 17.

Lorsque la poignée 1 est montée sur les bras 13, 15 de sorte que le câble de frein à main 17 passe dans la partie de liaison 5 qui est située du côté opposé à l'organe de déverrouillage 9 (voir figure 3), ce mécanisme peut comprendre une bielle de renvoi 21 montée pivotante à l'intérieur de la poignée, interposée entre la tringle d'actionnement 19 et le câble de frein 17.

La poignée 1 peut être formée d'un seul bloc dans une matière plastique rigide. De préférence, cette poignée comprend une partie centrale métallique (non représentée) destinée à être fixée sur les bras 13, 15, enrobée d'une matière synthétique souple (non représentée).

Le mode de mise en oeuvre et les avantages de la poignée selon l'invention découlent directement de la description qui précède.

La poignée 1 est disposée dans un véhicule automobile de sorte que l'organe de déverrouillage 9 pointe vers le conducteur.

Du fait du léger biais de la partie de préhension 7, cette poignée se présente à la main du conducteur sous l'angle dans lequel cette dernière a naturellement tendance à se trouver.

Du fait de sa position dans le prolongement de la partie de préhension 7, l'organe de déverrouillage 9 se présente sous le pouce du conducteur.

Du fait de la forme en creux 9, l'organe de déverrouillage 9 ne dépasse pas du volume défini par la poignée 1, ce qui supprime toute protubérance agressive.

Pour déverrouiller le frein à main, le conducteur pousse sur l'organe 9, ce qui a pour effet de tirer sur le câble de frein 17, et ainsi de libérer le frein grâce à un mécanisme à cliquet débrayable classique (non représenté).

Du fait de sa symétrie par rapport au plan P, la poignée selon l'invention peut être montée indifféremment sur des véhicules à conduite à gauche ou à droite: il suffit en effet de l'inverser pour l'adapter à chaque cas, et d'utiliser celui des deux mécanismes de déverrouillage décrits ci-dessus qui convient, en fonction de la position du câble de frein à main 17.

Comme cela apparaît clairement à présent, la poignée selon l'invention offre une ergonomie améliorée par rapport aux poignées en U de la technique antérieure.

En outre, la poignée selon l'invention peut être montée aussi bien sur un véhicule à conduite à gauche que sur un véhicule à conduite à droite.

Bien entendu, la présente invention n'est pas limitée au mode de réalisation exposé ci-dessus, fourni à titre d'exemple illustratif et non limitatif.

C'est ainsi, en particulier, que l'organe de déverrouillage pourrait être situé sur la partie de préhension, entre les parties de liaison. Dans ce cas, cet organe serait actionné par tous les doigts à l'exception du pouce de la main du conducteur.

C'est ainsi, également, que la poignée selon l'invention pourrait être fixée sur des bras montés coulissants sur le châssis d'un véhicule automobile, par exemple dans la zone du tableau de bord.

Dans ce cas, on actionnerait le frein à main en tirant sur la poignée, et l'organe de déverrouillage pourrait être situé sur une partie de liaison.

## Revendications

1. Poignée de frein à main en U (1) pour véhicule automobile, comprenant deux parties de liaison (3, 5) formant les branches dudit U et une partie de préhension (7) formant l'âme dudit U, ladite partie de préhension (7) s'étendant selon une direction formant un léger biais (α) avec lesdites parties de liaison (3, 5) **caractérisée en ce qu'**elle comprend un organe de déverrouillage (9) situé sur ladite partie de préhension (7), dans le prolongement de celle-ci.

2. Poignée selon la revendication 1, **caractérisée en ce que** ledit organe de déverrouillage (9) est disposé dans une partie en creux (11) formée dans ladite poignée (1).

3. Poignée selon la revendication 2, **caractérisée en ce que** ladite partie en creux (11) est conformée de manière à épouser sensiblement la forme d'un pouce.

4. Poignée selon l'une des revendications précédentes, **caractérisée en ce que** les deux parties de liaison (3, 5) s'étendent dans une direction sensiblement parallèle à la direction de marche du véhicule.

5. Poignée selon l'une des revendications précédentes, **caractérisée en ce qu'**une des parties de liaison (3, 5) contient un câble de frein à main (17).

6. Poignée selon l'une des revendications précédentes, **caractérisée en ce que** l'organe de déverrouillage (9) pointe vers le conducteur.

7. Poignée selon l'une des revendications précédentes, **caractérisée en ce que** la partie de préhension (7) est orientée selon une direction sensiblement transversale à la direction de marche du véhicule.

8. Poignée selon l'une des revendications précédentes, **caractérisée en ce qu'**elle est symétrique par rapport à un plan (P) coupant lesdites parties de liaison (3, 5) et ladite partie de préhension (7).

9. Poignée selon l'une des revendications précédentes, **caractérisée en ce que** ledit biais (α) est compris entre 10° et 20°.

10. Poignée selon la revendication 9, **caractérisée en ce que** ledit biais (α) vaut sensiblement 17°.

11. Poignée selon l'une des revendications précédentes, **caractérisée en ce que** ledit organe de déverrouillage est situé entre lesdites parties de liaison (3, 5).

12. Poignée selon l'une des revendications précédentes, **caractérisée en ce qu'**elle comprend des moyens pour tirer sur un câble de frein à main (17) lorsqu'on appuie sur ledit organe de déverrouillage (9).

13. Poignée selon la revendication 12, **caractérisée en ce que** lesdits moyens comprennent une tringle d'actionnement (19) dont une extrémité est reliée audit organe de déverrouillage (9) et dont l'autre extrémité est reliée audit câble (17), soit directement, soit par l'intermédiaire d'une bielle de renvoi (21).

## Claims

1. A U-shaped handbrake handle (1) for an automobile vehicle comprising two connecting portions (3, 5) forming the arms of the U and a gripper portion (7) forming the core of the U, the gripper portion (7) extending in a direction forming a slight bias (α) with the connecting portions (3, 5), **characterised in that** it comprises an unlocking member (9) disposed on the gripper portion (7) as a prolongation thereof.

2. A handle as claimed in claim 1, **characterised in that** the unlocking member (9) is disposed in a hollow portion (11) formed in the handle (1).

3. A handle as claimed in claim 2, **characterised in that** the hollow portion (11) is shaped so as substantially to match the shape of a thumb.

4. A handle as claimed in one of the preceding claims, **characterised in that** the two connecting portions (3, 5) extend in a direction substantially parallel to the direction of travel of the vehicle.

5. A handle as claimed in one of the preceding claims, **characterised in that** one of the connecting portions (3, 5) contains a handbrake cable (17).

6. A handle as claimed in one of the preceding claims, **characterised in that** the unlocking member (9) points towards the driver.

7. A handle as claimed in one of the preceding claims, **characterised in that** the gripper portion (7) is oriented in a direction substantially transverse to the direction of travel of the vehicle.

8. A handle as claimed in one of the preceding claims, **characterised in that** it is symmetrical with respect to a plane (P) intersecting the connecting portions (3, 5) and the gripper portion (7).

9. A handle as claimed in claim 9, **characterised in that** the bias (α) is between 10° and 20°.

10. A handle as claimed in one of the preceding claims, **characterised in that** the bias (α) is substantially 17°.

11. A handle as claimed in one of the preceding claims, **characterised in that** the unlocking member is disposed between the connecting portions (3, 5).

12. A handle as claimed in one of the preceding claims, **characterised in that** it comprises means for pulling a handbrake cable (17) when the unlocking member (9) is depressed.

13. A handle as claimed in claim 12, **characterised in that** these means comprise an actuating rod (19), one end of which is connected to the unlocking member (9) and the other end of which is connected to the cable (17) either directly or by means of a recall rod (21).

## Patentansprüche

1. Griff für eine Handbremse in Form eines U (1) für ein Kraftfahrzeug, aufweisend zwei Verbindungsteile (3, 5), welche die Schenkel des U bilden, und einen Greifteil (7), welcher den Steg des U bildet, wobei sich der Greifteil (7) gemäß einer Richtung erstreckt, die eine leichte Schräge (α) zu den Verbindungsteilen (3, 5) bildet, **dadurch gekennzeichnet, dass** er ein Entriegelungsbauteil (9) aufweist, welches an dem Greifteil (7) in der Verlängerung von diesem angeordnet ist.

2. Griff nach Anspruch 1, **dadurch gekennzeichnet, dass** das Entriegelungsbauteil (9) in einem vertieften Teil (11) angeordnet ist, der in dem Griff (1) gebildet ist.

3. Griff nach Anspruch 2, **dadurch gekennzeichnet, dass** der vertiefte Teil (11) in einer Weise geformt ist, um sich im Wesentlichen der Form eines Daumens anzuschmiegen.

4. Griff nach einem der vorangegangenen Ansprüche, **dadurch gekennzeichnet, dass** die zwei Verbindungsteile (3, 5) sich in einer Richtung im Wesentlichen parallel zur Fahrtrichtung des Fahrzeugs erstrecken.

5. Griff nach einem der vorangegangenen Ansprüche, **dadurch gekennzeichnet, dass** einer der Verbindungsteile (3, 5) ein Handbremsenkabel (17) enthält.

6. Griff nach einem der vorangegangenen Ansprüche, **dadurch gekennzeichnet, dass** das Entriegelungsbauteil (9) in Richtung zum Fahrer weist.

7. Griff nach einem der vorangegangenen Ansprüche, **dadurch gekennzeichnet, dass** der Greifteil (7) gemäß einer Richtung im Wesentlichen quer zur Fahrtrichtung des Fahrzeugs ausgerichtet ist.

8. Griff nach einem der vorangegangenen Ansprüche, **dadurch gekennzeichnet, dass** er symmetrisch im Verhältnis zu einer Ebene (P) ist, welche die Verbindungsteile (3, 5) und den Greifteil (7) schneidet.

9. Griff nach einem der vorangegangenen Ansprüche, **dadurch gekennzeichnet, dass** die Schräge (α) zwischen 10° und 20° liegt.

10. Griff nach Anspruch 9, **dadurch gekennzeichnet, dass** die Schräge (α) im Wesentlichen 17° beträgt.

11. Griff nach einem der vorangegangenen Ansprüche, **dadurch gekennzeichnet, dass** das Entriegelungsbauteil zwischen den Verbindungsteilen (3, 5) angeordnet ist.

12. Griff nach einem der vorangegangenen Ansprüche, **dadurch gekennzeichnet, dass** er Mittel zum Ziehen an einem Handbremsenkabel (17) aufweist, wenn man auf das Entriegelungsbauteil (9) drückt.

13. Griff nach Anspruch 12, **dadurch gekennzeichnet, dass** die Mittel eine Betätigungsstange (19) aufweisen, von der ein Ende mit dem Entriegelungsbauteil (9) verbunden ist und deren anderes Ende mit dem Kabel (17) entweder direkt oder über ein Umlenkglied (21) verbunden ist.
